# EUROPÄISCHE PATENTSCHRIFT

(11) **EP 3 425 610 B1**
(45) Veröffentlichungstag und Bekanntmachung des Hinweises auf die Patenterteilung: **10.06.2020**
(21) Anmeldenummer: 18181328.8
(22) Anmeldetag: 03.07.2018
(51) Int. Cl.: G01S 13/46, G01S 13/87, G08G 1/01, G08G 1/14, G08G 1/04, G08G 1/017, G08G 1/015

(54) **VERFAHREN UND SYSTEM ZUR ERFASSUNG VON FAHRZEUGEN AUF EINER PARKPLATZFLÄCHE**
METHOD AND SYSTEM FOR RECORDING VEHICLES IN A PARKING AREA
PROCÉDÉ ET SYSTÈME POUR DÉTECTION DE VÉHICULES DANS UN PARKING

(30) Priorität: 03.07.2017 DE 102017114770
(43) Veröffentlichungstag der Anmeldung: 09.01.2019
(73) Patentinhaber: Cleverciti Systems GmbH, 81379 München (DE)
(72) Erfinder: Hohenacker, Thomas M., 82319 Starnberg (DE); Prinz-Dreher, Konrad, 88138 Niederstaufen (DE)
(74) Vertreter: Manitz Finsterwald Patent- und Rechtsanwaltspartnerschaft mbB

(56) Entgegenhaltungen:
- WO-A1-2017/072286
- DE-A1-102008 006 356
- DE-A1-102013 004 493

## Beschreibung

Die vorliegende Erfindung betrifft ein Verfahren zur Erfassung von Fahrzeugen, welche in oder auf einer Parkplatzfläche parken.

Auf großen Parkplatzflächen, insbesondere auf großen Firmenparkplätzen mit mehreren hundert oder sogar tausend Parkplätzen kann aufgrund der großen Fläche, über die sich solche Parkplätze erstrecken, das Auffinden eines freien Parkplatzes (d.h. eines freien Parkplatzbereichs) aufwendig und zeitintensiv sein.

Es besteht daher ein Interesse daran, den Belegungsstatus von Parkplatzbereichen zu kennen und möglichst Benutzern der Parkplatzbereiche mitzuteilen.

Um den Belegungsstatus von Parkplatzbereichen zu erkennen, können beispielsweise Transponder verwendet werden, die Erkennungssignale aussenden, wobei anhand der Erkennungssignale die Position des Transponders ermittelt werden kann. Ist der Transponder an einem Fahrzeug befestigt, so kann über die Position des Transponders auf die Position des Fahrzeugs und auf den verwendeten und damit belegten Parkplatzbereich rückgeschlossen werden.

Um die Position des Transponders zu erkennen, werden die Erkennungssignale des Transponders üblicherweise von einer Vielzahl von Funkeinrichtungen empfangen, wobei mittels Lateration die Position des Transponders ermittelt wird. Von Nachteil ist hierbei, dass eine Vielzahl von Funkeinrichtungen vorgehalten werden muss, was den Aufwand zur Positionsbestimmung des Transponders erhöht.

Aus der WO 2017/072286 A1 ist ein Verfahren zur Erfassung und der Positionsbestimmung von Fahrzeugen bekannt, welches Fahrzeuge mittels Triangulation eines von einem Transponder ausgesendeten Erkennungssignals erfasst. Dabei sieht das Verfahren keine Einbeziehung von Ausschlussflächenbereichen in die Positionsbestimmung vor. Die DE 10 2013 004493 A1 offenbart ein Verfahren zur Anzeige von freien und/oder besetzten Parkplätzen mittels einer Kameraüberwachung eines Parkplatzbereiches. Ferner beschreibt die DE 10 2008 006356 A1 ein System zur Erfassung einer Parkposition eines Fahrzeugs mit Hilfe eines RFID-Systems zur Ortung eines RFID-Tags innerhalb eines definierten Gebietes.

Es ist die der Erfindung zugrundeliegende Aufgabe, ein Verfahren zur Erfassung von geparkten Fahrzeugen anzugeben, welches den Aufwand zur Erfassung der geparkten Fahrzeuge minimiert.

Diese Aufgabe wird erfindungsgemäß durch ein Verfahren gemäß Anspruch 1 gelöst.

### Gemäß dem Verfahren der Erfindung

- werden Ausschlussflächenbereiche erkannt und/oder festgelegt, die nicht zum Parken von Fahrzeugen geeignet und/oder vorgesehen sind,
- wird in oder an einem Fahrzeug ein Transponder angeordnet,
- sendet der Transponder automatisch wiederholt ein Erkennungssignal aus,
- wird das Erkennungssignal von mindestens zwei und höchstens drei Funkeinrichtungen empfangen,
- wird mittels einer Steuereinrichtung anhand der Laufzeit und/oder anhand von Laufzeitunterschieden des Erkennungssignals von dem Transponder zu den Funkeinrichtungen und anhand der Position der Ausschlussflächenbereiche die Position des Transponders ermittelt.

Üblicherweise wären für die Positionsbestimmung eines Transponders im dreidimensionalen Raum zumindest vier Funkeinrichtungen notwendig, welche anhand der Laufzeit und/oder anhand von Laufzeitunterschieden des Erkennungssignals einen jeweiligen Abstand des Transponders zu der jeweiligen Funkeinrichtung bestimmen. Aus den so ermittelten vier Abstandswerten lässt sich dann eine eindeutige Position des Transponders bestimmen.

Erfindungsgemäß werden allerdings maximal drei Funkeinrichtungen verwendet, wobei bei drei Funkeinrichtungen die tatsächliche Position des Transponders lediglich auf zwei mögliche Positionen eingegrenzt werden kann. Aufgrund der Zuhilfenahme der Ausschlussflächenbereiche kann allerdings eine der beiden Positionen ausgeschlossen werden (sofern eine der beiden Positionen in dem Ausschlussflächenbereich liegt), da davon ausgegangen wird, dass das parkende Fahrzeug sich nicht im Bereich der Ausschlussfläche befindet.

Durch die Verwendung von höchstens drei Funkeinrichtungen kann der Aufwand für die Positionsbestimmung des Transponders verringert werden, wodurch die Erfassung von Fahrzeugen mit geringeren Kosten und damit wirtschaftlicher durchgeführt werden kann.

Unter einem Ausschlussflächenbereich kann beispielsweise eine Parkverbotszone, der Standort eines Gebäudes, eine Grünfläche und/oder Fußgängerbereiche verstanden werden. Alle diese Bereiche eignen sich nicht zum Parken von Fahrzeugen und/oder sind nicht zum Parken von Fahrzeugen vorgesehen. Insbesondere können alle Flächen außerhalb der Parkplatzfläche als Ausschlussflächenbereiche angesehen werden. Die Ausschlussflächenbereiche können eine zusammenhängende Fläche sein. Ebenfalls ist es möglich, dass mehrere nicht aneinander angrenzende Flächen gemeinsam die Ausschlussflächenbereiche bilden.

Ebenfalls ist es möglich, dass das erfindungsgemäße Verfahren auch in Gebäuden (d.h. "indoor") eingesetzt wird, beispielsweise in Parkhäusern. Die Ausschlussflächenbereiche können dann z.B. Treppenhäuser oder Bereiche außerhalb des Gebäudes umfassen. Das erfindungsgemäße Verfahren kann auch gleichzeitig in Gebäuden und im Freien eingesetzt werden und so z.B. eine nahtlose Überwachung von parkenden Fahrzeugen, z.B. bei großen Einkaufszentren, ermöglichen.

Die Ausschlussflächenbereiche können von der Steuereinrichtung z.B. automatisch erkannt werden und/oder beispielsweise bei der Installation der Steuereinrichtung in die Steuereinrichtung eingespeichert werden.

Nachfolgend werden bestimmte Aspekte des erfindungsgemäßen Verfahrens noch genauer erläutert.

Erfindungsgemäß wird der Transponder in oder an einem Fahrzeug angebracht, dessen Position mittels des Erkennungssignals festgestellt werden soll. Unter einem Erkennungssignal können insbesondere auch mehrere zeitlich beabstandete Signale verstanden werden, die z.B. periodisch von dem Transponder ausgesandt werden. Bevorzugt kann der Transponder von den Funkeinrichtungen zur Aussendung des Erkennungssignals aufgefordert werden. Hierzu können die Funkeinrichtungen wiederholt z.B. Broadcast-Signale (d.h. Anfragesignale) aussenden. Die Broadcast-Signale können von einem (bzw. jedem) Transponder empfangen werden. Nach dem Empfang des Broadcast-Signals kann der jeweilige Transponder automatisch mit einem Erkennungssignal antworten.

Bei Fahrzeugen kann es sich beispielsweise um Personenkraftwagen (PKWs), Lastkraftwagen (LKWs), Motorräder, Fahrräder, Anhänger und dergleichen handeln. Ebenfalls ist es möglich, dass es sich bei den Fahrzeugen um Schiffe oder Flugzeuge handelt. In diesem Fall können die Parkplatzbereiche Anlegestellen eines Hafens oder Parkpositionen auf einem Flughafen sein.

Eine Parkplatzfläche bezeichnet einen Flächenbereich, in welchem sich mehrere Parkplatzbereiche befinden. Ein Parkplatzbereich kann auch als einzelner Stellplatz bezeichnet werden, d.h. ein Parkplatzbereich bietet üblicherweise einem Fahrzeug Platz. Die Parkplatzbereiche können unterschiedliche Größen aufweisen und so beispielsweise an die Größe von PKWs, LKWs oder Fahrrädern angepasst sein.

Der in oder an dem Fahrzeug angeordnete Transponder kann beispielsweise im Handschuhfach oder hinter der Windschutzscheibe mitgeführt werden und eine Batterie oder einen Akku zur Energieversorgung umfassen. Der Transponder kann auch an einer Außenfläche des Fahrzeugs angebracht oder fest in einem Fahrzeug verbaut und beispielsweise in einem Rückspiegel des Fahrzeugs angeordnet sein. Der Transponder kann in diesem Fall mit dem elektrischen Bordnetz des Fahrzeugs gekoppelt sein. Der Transponder kann etwa die Größe einer Zigarettenschachtel, einer Streichholzschachtel oder einer Kreditkarte aufweisen und automatisch das Erkennungssignal aussenden. Das automatische Aussenden kann dabei in gleichbleibenden zeitlichen Abständen ohne eine Einwirkung von außen erfolgen. Alternativ kann der Transponder als Antwort auf ein von außen eintreffendes Anfragesignal (z.B. das oben genannte Broadcast-Signal), welches z.B. von der Funkeinrichtung ausgesandt wird, automatisch das Erkennungssignal aussenden. Bei dem Erkennungssignal und dem Anfragesignal kann es sich um Radiosignale, d.h. Funksignale, handeln. Aus dem Zeitunterschied zwischen dem Aussenden des Anfragesignals und dem Empfang des Erkennungssignals kann eine Laufzeit des Erkennungssignals ermittelt werden. Hierzu kann von dem Zeitunterschied bevorzugt die Verarbeitungszeit des Transponders subtrahiert werden.

Das Erkennungssignal wird von der Funkeinrichtung (auch Anker genannt) bzw. von den Funkeinrichtungen empfangen. Die nachfolgenden Ausführungen beziehen sich sowohl auf jeweils eine einzelne Funkeinrichtung, als auch auf alle Funkeinrichtungen. Die Funkeinrichtung kann ortsfest angebracht sein, beispielsweise in einer erhöhten Position an oder in einer Beleuchtungseinrichtung der Parkplatzfläche. Bevorzugt ist die Funkeinrichtung zum omnidirektionalen Empfang des Erkennungssignals ausgebildet. Alternativ kann die Funkeinrichtung auch eine Richtcharakteristik für den Empfang und das Aussenden von Funksignalen aufweisen.

Die Funkeinrichtungen sind bevorzugt mit der Steuereinrichtung gekoppelt, wobei die Steuereinrichtung beispielsweise Laufzeitunterschiede zu den verschiedenen Funkeinrichtungen ermitteln kann. Aus den Laufzeitunterschieden kann die Steuereinrichtung die Position des Transponders unter Zuhilfenahme der bekannten Positionen der Ausschlussflächenbereiche ermitteln. Hierzu können die Positionen der Funkeinrichtungen im dreidimensionalen Raum der Steuereinrichtung bekannt sein.

Ebenfalls können die Position und/oder die Begrenzung der Parkplatzfläche im dreidimensionalen Raum der Steuereinrichtung bekannt sein.

Insbesondere sind die Funkeinrichtungen ortsfest angeordnet und bevorzugt zueinander beabstandet.

Bei der Bestimmung der Position des Transponders kann die Steuereinrichtung eine Relativposition des Transponders ermitteln, d.h. eine Position relativ zu z.B. einer der Funkeinrichtungen. Alternativ kann die Steuereinrichtung auch eine Absolutposition des Transponders ermitteln, beispielsweise dessen GPS-Koordinaten. Die Relativ- oder Absolutposition wird bevorzugt als Position im dreidimensionalen Raum ermittelt.

Überdies kann die Position des Transponders bzw. des Fahrzeugs anhand mehrerer aufeinanderfolgender Erkennungssignale mehrmals ermittelt bzw. berechnet werden, wodurch die Genauigkeit der Positionsbestimmung, beispielsweise durch Mittelwertbildung, erhöht werden kann. Überdies kann bei der mehrmaligen Positionsbestimmung erkannt werden, dass ein Fahrzeug parkt. Dies kann bevorzugt dadurch erfolgen, dass eine über eine vorbestimmte Zeitdauer gleichbleibende Position des Transponders ermittelt wird.

Bei der Lateration der Position des Transponders wird bevorzugt anhand der Laufzeit des Erkennungssignals und/oder des Anfragesignals der Abstand einer jeweiligen Funkeinrichtung zu dem Transponder ermittelt. Der so ermittelte Abstand ergibt ein Kugelvolumen um die jeweilige Funkeinrichtung herum, wobei sich der Transponder auf einem Punkt der Oberfläche des Kugelvolumens befinden muss. Bei der Verwendung von z.B. drei Funkeinrichtungen ergeben sich insbesondere drei Kugelvolumen. Die Oberflächen aller drei Kugelvolumen schneiden sich idealerweise jeweils in den oben genannten zwei möglichen Positionen des Transponders.

Insbesondere kann das erfindungsgemäße Verfahren wiederholt durchgeführt werden, wobei das Verfahren beispielsweise für jedes neu auf der Parkplatzfläche eintreffende Fahrzeug wiederholt wird. Bevorzugt werden Erkennungssignale nahezu ständig (z.B. mehrmals pro Sekunde) ausgesendet und/oder angefordert, so dass die Veränderung der Position eines Fahrzeugs nachvollziehbar ist. Auch kann eine Vielzahl von Transpondern (und damit eine Vielzahl von Fahrzeugen) gleichzeitig geortet werden, wodurch auch große Parkplatzflächen überwacht werden können.

Vorteilhafte Weiterbildungen der Erfindung sind der Beschreibung, den Zeichnungen sowie den Unteransprüchen zu entnehmen.

Gemäß einer ersten vorteilhaften Ausführungsform werden genau drei Funkeinrichtungen zum Empfang des Erkennungssignals verwendet, wobei die drei Funkeinrichtungen entlang einer von einer Geraden abweichenden Linie angeordnet sind. Dies bedeutet, eine Gerade, die durch zwei der drei Funkeinrichtungen verläuft, verläuft nicht auch durch die dritte Funkeinrichtung. Insbesondere können die Funkeinrichtungen so angeordnet sein, dass sich für die Positionen der Funkeinrichtungen keine Symmetrieachse und/oder keine Punktsymmetrie ergeben. Durch die derartige Anordnung der Funkeinrichtungen, d.h. die Anordnung z.B. nicht entlang einer Geraden, können Symmetriefälle reduziert werden, in welchen auch drei Funkeinrichtungen mehr als zwei mögliche Positionen des Transponders liefern (beispielsweise wenn sich der Transponder auf einer Symmetrieachse der Funkeinrichtungen befindet). Die Zuverlässigkeit der Positionsbestimmung wird hierdurch erhöht.

Gemäß einer weiteren vorteilhaften Ausführungsform sind die Funkeinrichtungen in zumindest zwei unterschiedlichen Höhen über dem Boden der Parkplatzfläche angeordnet. Als Boden der Parkplatzfläche ist eine gemeinsame Referenzfläche für alle Funkeinrichtungen zu verstehen. Auch durch die unterschiedlichen Höhen können die oben genannten Symmetriefälle weiter reduziert werden, wodurch die Zuverlässigkeit der Positionsbestimmung noch gesteigert werden kann.

Gemäß einer weiteren vorteilhaften Ausführungsform werden genau zwei Funkeinrichtungen zum Empfang des Erkennungssignals verwendet. Die zwei Funkeinrichtungen können ebenfalls auf unterschiedlichen Höhen über dem Boden der Parkplatzfläche angeordnet sein.

Bei der Verwendung von genau zwei Funkeinrichtungen kann der Steuereinrichtung die Höhe des Transponders in oder an dem Fahrzeug bekannt sein und/oder mitgeteilt werden, wobei die Steuereinrichtung auch anhand der Höhe des Transponders die Position des Transponders ermittelt.

Bei der Verwendung von zwei Funkeinrichtungen ergibt sich bei der Lateration des Transponders für die mögliche Position des Transponders ein im dreidimensionalen Raum liegender Kreis (der Schnittkreis der Oberflächen zweier Kugelvolumen). Aufgrund der bekannten Höhe des Transponders in oder an dem Fahrzeug verbleiben dann nur zwei mögliche Positionen, die sowohl auf dem Kreis liegen als auch die Randbedingung der Höhe des Transponders erfüllen (d.h. der im Raum liegende Kreis wird z.B. mit einer parallel zum Boden verlaufenden Ebene in Höhe des Transponders geschnitten). Durch das zusätzliche Heranziehen der Ausschlussflächenbereiche kann von den zwei möglichen Positionen eine eliminiert werden, so dass die Position des Transponders auch mit zwei Funkeinrichtungen eindeutig bestimmt werden kann.

Bei der Höhe des Transponders kann es sich um die Höhe des Transponders über dem Boden handeln, auf welchem das Fahrzeug steht. Aufgrund der bekannten Position und auch aufgrund der bekannten Höhe der Parkplatzfläche kann dann insbesondere auch die absolute Höhe des Transponders ermittelt werden.

Die Höhe des Transponders in oder an dem Fahrzeug kann auch bei der Verwendung von drei Funkeinrichtungen bekannt sein, wodurch die Genauigkeit der Positionsbestimmung mit drei Funkeinrichtungen weiter verbessert werden kann.

Gemäß einer weiteren vorteilhaften Ausführungsform ist die Höhe des Transponders in dem Erkennungssignal enthalten. Die Höhe kann beispielsweise beim Einbau des Transponders in das Fahrzeug ermittelt werden und in dem Transponder gespeichert werden. Dann kann der Transponder seine Einbauhöhe mit jedem Erkennungssignal mitsenden. Alternativ oder zusätzlich kann die Steuereinrichtung eine Datenbank umfassen, in welcher die Höhen der jeweiligen Transponder gespeichert sind. Weiter alternativ oder zusätzlich kann die Höhe des Transponders von der Steuereinrichtung geschätzt werden, da der Transponder z.B. im Bereich der Windschutzscheibe oder im Handschuhfach angeordnet sein kann.

Bei der realen Durchführung der Positionsbestimmung des Transponders ist es möglich, dass aufgrund von Ungenauigkeiten bei der Laufzeitmessung der Abstand des Transponders von einer Funkeinrichtung nicht vollständig korrekt ermittelt wird. Beispielsweise kann eine Messungenauigkeit der Funkeinrichtung in der Größenordnung von etwa 10 cm bis 20 cm auftreten. Durch die Messungenauigkeit können sich z.B. bei der Verwendung dreier Funkeinrichtungen nicht zwei Schnittpunkte der jeweils drei Kugelvolumen ergeben, sondern es können mehr als zwei Schnittpunkte zwischen jeweils zwei der Oberflächen der Kugelvolumen vorliegen.

Bevorzugt werden bei Messungenauigkeiten zumindest drei, bevorzugt zumindest sechs Schnittpunkte der Kugelvolumen ermittelt. Im Anschluss kann ein konvexer Polyeder ermittelt werden, auf dessen Oberflächen die zumindest drei bzw. zumindest sechs Schnittpunkte liegen. Liegen die Schnittpunkte der Kugelvolumen in einer Ebene (beispielsweise, weil die Einbauhöhe des Transponders bekannt ist), so kann statt des konvexen Polyeders auch ein konvexes Polygon verwendet werden, welches die Schnittpunkte einschließt oder durch die Schnittpunkte definiert ist. Sind mehr als drei bzw. sechs Schnittpunkte bekannt, so werden diejenigen drei bzw. sechs Schnittpunkte verwendet, die zueinander den geringsten Abstand besitzen. Abschließend kann der Schwerpunkt des Polyeders oder des Polygons bestimmt werden. Der Schwerpunkt kann dann als mögliche oder tatsächliche Position des Transponders verwendet werden, wobei insbesondere auch die Positionen der Ausschlussflächenbereiche in die Positionsbestimmung einbezogen werden.

Es ist möglich, dass insgesamt mehr als zwei oder drei Funkeinrichtungen verwendet werden, wobei jeweils zwei oder drei Funkeinrichtungen als Gruppe zusammengefasst werden können, um (innerhalb der Gruppe) das erfindungsgemäße Verfahren durchzuführen.

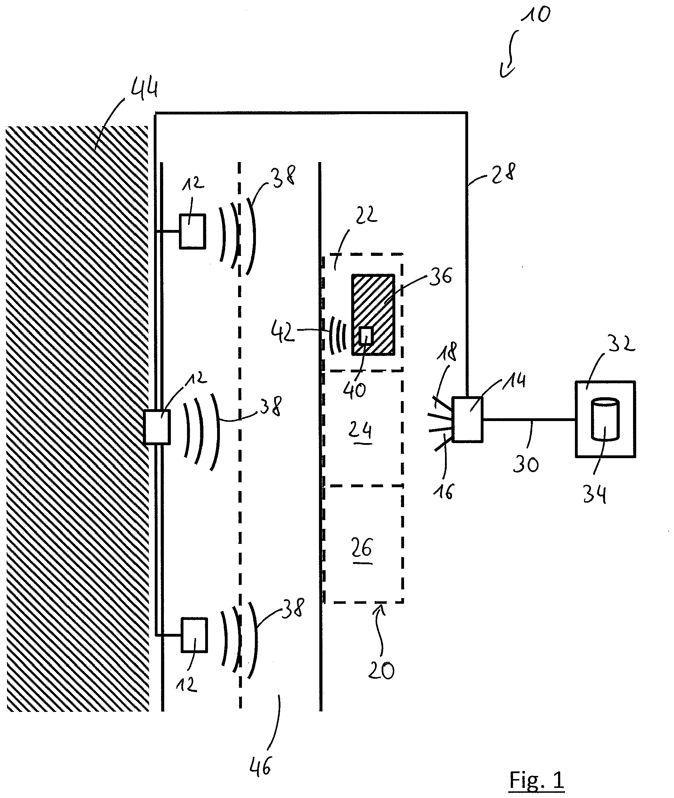

Bevorzugt wird die Gruppe von drei Funkeinrichtungen derart aus allen Funkeinrichtungen ausgewählt, dass die drei ausgewählten Funkeinrichtungen jeweils benachbart sind (d.h. es wird keine Funkeinrichtung übersprungen). Überdies können die drei ausgewählten Funkeinrichtungen so positioniert sein, dass eine erste Funkeinrichtung einen ersten Abstand zu einer zweiten Funkeinrichtung und einen zweiten Abstand zu einer dritten Funkeinrichtung aufweist, wobei der zweite Abstand größer als der erste Abstand ist. Ein dritter Abstand zwischen der zweiten und dritten Funkeinrichtung ist dabei kleiner als der zweite Abstand. Als zusätzliche Randbedingung können die drei Funkeinrichtungen derart gewählt werden, dass der Abstand der ersten Funkeinrichtung zu dem Transponder größer ist als der jeweilige Abstand der zweiten und dritten Funkeinrichtung zu demselben Transponder. Hierdurch können zwei Funkeinrichtungen ausgewählt werden, die "vor" dem Transponder liegen (nämlich die erste und die zweite Funkeinrichtung) und eine Funkeinrichtung, die "hinter" dem Transponder liegt (die dritte Funkeinrichtung). Bei einer solchen Auswahl der Funkeinrichtungen, die beispielsweise in der später erläuterten Fig. 1 dargestellt ist, lassen sich gute Ergebnisse für die Positionsbestimmung des Transponders erzielen.

Gemäß einer weiteren vorteilhaften Ausführungsform verläuft eine gerade Verbindungslinie zwischen jeweils zwei der Funkeinrichtungen (in der Draufsicht) außerhalb der Parkplatzfläche. Dies bedeutet, die Funkeinrichtungen können sich beispielsweise alle auf derselben Seite und außerhalb der Parkplatzfläche befinden. Anders ausgedrückt verläuft die gerade Verbindungslinie nicht oberhalb der Parkplatzfläche. Hierbei ist von Vorteil, dass dann die z.B. bei drei Funkeinrichtungen ermittelten möglichen zwei Positionen einmal im Bereich der Parkplatzfläche und einmal mit hoher Wahrscheinlichkeit außerhalb der Parkplatzfläche (und damit in dem Ausschlussflächenbereich) befinden. Hierdurch kann dann mit hoher Wahrscheinlichkeit die korrekte Position des Transponders ausgewählt und als Standort eines Fahrzeugs gewertet werden.

Gemäß einer weiteren vorteilhaften Ausführungsform können die Funkeinrichtungen miteinander kommunizieren, um mittels Signallaufzeitbestimmung den Abstand zwischen jeweils zwei der Funkeinrichtungen zu ermitteln. Hierbei ist von Vorteil, dass durch ein solches Vorgehen die Genauigkeit der Distanzmessung erhöht werden kann (wenn beispielsweise die Relativpositionen der Funkeinrichtungen sehr genau bekannt sind).

Gemäß einer weiteren vorteilhaften Ausführungsform werden vor der Ermittlung der Position des Transponders Parkplatzbereiche in der Parkplatzfläche erkannt und/oder festgelegt. Die Parkplatzbereiche innerhalb der Parkplatzfläche können beispielsweise einmalig festgelegt werden. Alternativ können die Parkplatzbereiche auch anhand der Position von Fahrzeugen bzw. deren Transpondern erkannt werden. Zusätzlich können auch Bereiche festgelegt oder ermittelt werden, in welchen ein Parken grundsätzlich unerwünscht oder verboten ist (Verbotszonen). Solche Bereiche können zum Beispiel eine Straße oder eine Feuerwehranfahrtszone sein. Diese Bereiche können dann den Ausschlussflächenbereichen zugeschlagen werden.

Gemäß einer weiteren vorteilhaften Ausführungsform ermittelt die Steuereinrichtung anhand des Erkennungssignals eine Identifikation des Transponders, wobei anhand des Erkennungssignals auch ermittelt wird, ob das Fahrzeug parkt. Sofern das Fahrzeug auf einem der Parkplatzbereiche parkt, wird die Identifikation des Transponders und der von dem Fahrzeug verwendete Parkplatzbereich an einen Registrierungsserver übermittelt, wobei der Registrierungsserver anhand der Identifikation des Transponders ein Statussignal für den verwendeten Parkplatzbereich ausgibt. Der Registrierungsserver kann auch jeweils für mehrere oder alle Parkplatzbereiche der Parkplatzfläche ein Statussignal ausgeben. Alternativ kann die Belegung von mehreren oder allen Parkplatzbereichen der Parkplatzfläche in einem einzigen Statussignal enthalten sein. Das Statussignal kann z.B. in Form eines digitalen Datensignals ausgegeben werden. Insbesondere kann das Statussignal auch an ein Parkleitsystem weitergegeben werden, welches beim Vorhandensein freier Parkplatzbereiche Autofahrer zu der Parkplatzfläche lotst.

Gemäß einer weiteren vorteilhaften Ausführungsform ermittelt der Registrierungsserver anhand der Identifikation des Transponders einen Berechtigungsstatus für den verwendeten Parkplatzbereich, wobei der Berechtigungsstatus in dem Statussignal enthalten ist. Dies bedeutet, der Registrierungsserver überprüft, ob der Identifikation des Transponders eine Berechtigung zum Parken auf dem jeweils verwendeten Parkplatzbereich zugeordnet ist oder nicht. Hierzu kann in dem Registrierungsserver eine Nachschlagetabelle vorliegen, in der für jeden Transponder (und damit für den entsprechenden Benutzer und/oder das entsprechende Fahrzeug) die jeweiligen Berechtigungen eingetragen sind. Beispielsweise kann für einen Transponder, der einem Elektroauto zugeordnet ist, die Berechtigung zum Parken auf Parkplatzbereichen, welche für Elektroautos reserviert sind, in der Nachschlagetabelle eingetragen sein.

Dementsprechend kann für Parkplatzbereiche der Parkplatzfläche eine erforderliche Berechtigung zum Parken festgelegt sein. Beispielsweise kann angegeben sein, dass vorbestimmte Parkplatzbereiche nur von Elektroautos und/oder nur von Mitgliedern des Managements einer Firma verwendet werden dürfen.

Weiter bevorzugt ist der Transponder ausgebildet, eine Bewegung des Fahrzeugs zu erkennen, wobei eine Häufigkeit des Aussendens von Erkennungssignalen nach einem vorbestimmten Zeitraum ohne eine Bewegung des Fahrzeugs reduziert oder ein Aussenden des Erkennungssignals ganz unterbunden wird. Dies bedeutet, eine Häufigkeit des Aussendens von Erkennungssignalen kann variabel gestaltet sein, insbesondere in Abhängigkeit von Bewegungen des Fahrzeugs. Hierdurch kann erreicht werden, dass der Transponder eines stehenden bzw. parkenden Fahrzeugs nicht unnötig viele Erkennungssignale aussendet. Auf diese Weise kann Energie im Transponder eingespart werden. Zudem wird die Funkeinrichtung nicht mit zu vielen Erkennungssignalen konfrontiert, sodass die einzelnen Erkennungssignale besser lokalisiert werden können. Beispielsweise kann die Häufigkeit der Erkennungssignale 5 oder 10 Minuten nach der letzten erkannten Bewegung des Fahrzeugs reduziert werden. Zur Erkennung von Bewegungen des Fahrzeugs kann der Transponder ein GPS-System umfassen, auf ein GPS-System des Fahrzeugs zurückgreifen und/oder einen Beschleunigungssensor und/oder ein Gyroskop umfassen. Eine Parkrichtung kann mittels eines im Transponder integrierten Kompasses ermittelt und an die Funkeinrichtungen übermittelt werden. Durch die Erfassung der Parkrichtung kann die Position des Fahrzeugs weiter eingegrenzt werden, beispielsweise wenn bekannt ist, dass Fahrzeuge auf Parkplätzen entlang einer bestimmten Straßenseite immer in dieselbe Richtung parken. Hierdurch kann ggf. eine weitere Funkeinrichtung eingespart werden.

Verlässt das Fahrzeug seine Parkposition, kann dieser Zustandswechsel z.B. mittels des Beschleunigungssensors erkannt werden, woraufhin die Häufigkeit des Aussendens von Erkennungssignalen wieder erhöht werden kann. Außerdem kann der Transponder einen RFID-Chip umfassen, welcher von Parkplatzüberwachungspersonal ausgelesen werden kann, um z.B. Berechtigungen des Transponders auszulesen. Der RFID-Chip kann auch dazu dienen, z.B. Zugang zu Garagen oder mittels Schranken abgesicherten Parkplatzbereichen zu erlangen.

Gemäß einer weiteren vorteilhaften Ausführungsform werden Statussignale betreffend mehrere Parkplatzbereiche an einen Parkplatzserver und/oder ein mobiles Anzeigegerät übermittelt, wobei der Parkplatzserver und/oder das mobile Anzeigegerät eine Übersicht über freie und belegte Parkplatzbereiche anhand der Statussignale anzeigen. Insbesondere kann es sich bei dem mobilen Anzeigegerät um ein Mobiltelefon handeln, welches mittels einer App die freien und belegten Parkplatzbereiche anzeigt. Der Parkplatzserver kann die freien und belegten Parkplatzbereiche mittels einer Webseite darstellen. Der Parkplatzserver und/oder das mobile Anzeigegerät können auf den Registrierungsserver zugreifen, um Information über belegte und freie Parkplatzbereiche abzufragen.

Gemäß einer weiteren vorteilhaften Ausführungsform sendet der Transponder das Erkennungssignal verschlüsselt aus, wobei das Erkennungssignal insbesondere mittels eines asymmetrischen Verschlüsselungsverfahrens erzeugt wird. Hierdurch kann unterbunden werden, dass das Erkennungssignal des Transponders abgefangen, kopiert und von einem Dritten wieder ausgesandt wird, um den ursprünglichen Transponder nachzuahmen. Auf diese Weise wird erschwert, dass die Identität des Transponders gestohlen wird. Bevorzugt kann das Erkennungssignal einen variablen Anteil aufweisen, beispielsweise einen Zeitstempel, eine Zufallszahl oder einen Teil des Anfragesignals, wobei der variable Anteil ebenfalls verschlüsselt wird. Hierdurch kann die Nachahmung des Erkennungssignals weiter erschwert werden.

Die Erfindung betrifft weiterhin ein System, umfassend zumindest einen Transponder, zwei oder drei Funkeinrichtungen und eine Steuereinrichtung. Das erfindungsgemäße System zeichnet sich dadurch aus, dass es zur Durchführung des oben beschriebenen Verfahrens ausgebildet ist.

Gemäß einer vorteilhaften Weiterbildung des Systems sind die Funkeinrichtungen in oder an Straßenleuchten, an Fassaden, an Straßenschildern und/oder an Ampeln angebracht. Dies bedeutet, die Funkeinrichtungen können erhöht über dem Boden angeordnet sein, wodurch sich ein guter Empfang der Erkennungssignale ergibt.

Die Funkeinrichtungen können die Stromversorgung der Straßenleuchte oder der Ampeln mitbenutzen, hierdurch kann der Installationsaufwand für die Funkeinrichtungen reduziert werden. Alternativ oder zusätzlich können die Funkeinrichtungen oder das gesamte System von Solarzellen mit elektrischer Energie versorgt werden.

Bevorzugt sind der Transponder und die Funkeinrichtungen für eine Funkkommunikation im Frequenzbereich von etwa 2,4 GHz oder 5 GHz ausgebildet, wobei beispielsweise ein Frequenzbereich von 2,2 GHz bis 2,6 GHz verwendet werden kann. Insbesondere verwenden der Transponder und die Funkeinrichtung WLAN, Bluetooth und/oder ZigBee. Bevorzugt wird das ISM-Band verwendet, das sich im Bereich von 2,4 GHz befindet. Ebenso ist es möglich, andere Technologien, wie z.B. LoraWAN (Long Range Wide Area Network), NB-IOT (Narrow Band Internet Of Things) und/oder 4G (vierte Generation des Mobilfunks, z.B. LTE-Advanced) zu verwenden.

Die Erkennungssignale können sogenannte "Chirp"-Impulse mit veränderlicher Frequenz sein, wobei während eines Impulses die Sendefrequenz von einer Startfrequenz bis zu einer Endfrequenz verändert wird. Die Frequenzveränderung schafft die Möglichkeit, das Erkennungssignal auch bei breitbandiger Hintergrundstrahlung sicher zu detektieren.

Gemäß einer vorteilhaften Ausführungsform des erfindungsgemäßen Systems ist ein Überwachungssystem zur optischen, zumindest bereichsweisen Erfassung der Parkplatzfläche vorgesehen, wobei das Überwachungssystem ein Kamerasystem und eine Erkennungseinheit umfasst, die ausgebildet ist, freie und besetzte Parkplatzbereiche, insbesondere mittels Bildverarbeitung, bevorzugt anhand von Einzelbildern zu erkennen. Durch das Überwachungssystem kann zusätzlich zu der Erkennung von parkenden Fahrzeugen anhand der Transponder und deren Erkennungssignalen eine zusätzliche Überprüfung der Parksituation erfolgen.

Hierzu kann das Kamerasystem so montiert und ausgerichtet sein, dass es bevorzugt jeweils mehrere Parkplatzbereiche der Parkplatzfläche erfasst. Das Kamerasystem kann Bildinformationen erfassen, die im Folgenden Abbildindizien genannt werden. Die vom Kamerasystem an die Erkennungseinheit gelieferten Abbildindizien der Parkplatzbereiche können also beispielsweise Bildaufnahmen der kompletten Parkplatzbereiche oder aber auch nur Bilder von Teilbereichen der Parkplatzbereiche sein. Die Erkennungseinheit kann dann anhand der Abbildindizien einen Belegungsstatus eines jeweiligen Parkplatzbereichs ermitteln. Bevorzugt wird ein Parkplatzbereich nur dann von der Steuereinrichtung als belegt erkannt, wenn sowohl ein Signal des Transponders als auch die Abbildindizien des Kamerasystems anzeigen, dass der jeweilige Parkplatzbereich belegt ist.

Im Übrigen gelten die zu dem erfindungsgemäßen Verfahren getroffenen Aussagen für das erfindungsgemäße System entsprechend, insbesondere hinsichtlich Vorteilen und bevorzugten Ausführungsformen.

Nachfolgend wird die Erfindung rein beispielhaft unter Bezugnahme auf die Zeichnungen beschrieben. Es zeigen:
- Fig. 1: eine schematische Ansicht eines Systems mit drei Funkeinrichtungen zur Erfassung von geparkten Fahrzeugen;
- Fig. 2: eine schematische Ansicht eines Systems mit zwei Funkeinrichtungen zur Erfassung von geparkten Fahrzeugen; und
- Fig. 3: schematisch die Positionsbestimmung eines Transponders mittels dreier Funkeinrichtungen.

Fig. 1 zeigt schematisch eine erste Ausführungsform eines Systems 10 zur Erfassung von geparkten Fahrzeugen.

Das System 10 umfasst drei zueinander beabstandet angeordnete Funkeinrichtungen 12 sowie ein Überwachungssystem, von welchem eine Kameraeinheit 14 dargestellt ist. Die Kameraeinheit 14 umfasst eine erste Kamera 16 und eine zweite Kamera 18.

Die drei Funkeinrichtungen 12 sind entlang einer Seite einer Straße 46 angeordnet, wobei die Funkeinrichtungen 12 in unterschiedlichen Höhen (z.B. an nicht dargestellten Leuchtenmasten) und entlang einer von einer Geraden abweichenden Linie angeordnet sind.

Die Kameraeinheit 14 sowie die Funkeinrichtungen 12 überwachen eine Parkplatzfläche 20, auf der sich ein erster Parkplatzbereich 22, ein zweiter Parkplatzbereich 24 und ein dritter Parkplatzbereich 26 befinden. Die Parkplatzfläche 20 befindet sich auf einer den Funkeinrichtungen 12 gegenüberliegenden Seite der Straße 46.

Die nachfolgende Erklärung bezieht sich lediglich beispielhaft auf drei Parkplatzbereiche 22, 24, 26, wobei das System 10 in der Lage ist, längere Straßenzüge oder große Flächen mit mehreren hundert Parkplatzbereichen zu überwachen.

Die Funkeinrichtungen 12 sind mittels einer ersten Datenverbindung 28 mit der Kameraeinheit 14 gekoppelt, wobei in der Kameraeinheit 14 eine Steuereinrichtung und eine Erkennungseinheit (beide nicht gezeigt) vorgesehen sind. Die Kameraeinheit 14 wiederum ist mittels einer zweiten Datenverbindung 30 mit einem Registrierungsserver 32 gekoppelt. Der Registrierungsserver 32 umfasst eine Datenbank 34.

Nähert sich im Betrieb des Systems 10 ein Fahrzeug 36 den Parkplatzbereichen 22, 24, 26, so werden mit den Funkeinrichtungen 12 wiederholt Anfragesignale 38 ausgesendet, die von einem Transponder 40 im Fahrzeug 36 mit einem Erkennungssignal 42 beantwortet werden. Anhand der Laufzeit bis zum Empfang des Erkennungssignals 42 und/oder anhand von Laufzeitunterschieden zu den verschiedenen Funkeinrichtungen 12 wird mittels Lateration auf die Position des Transponders 40 geschlossen. Bei der so durchgeführten Positionsbestimmung wird ein Ausschlussflächenbereich 44 berücksichtigt. Der Ausschlussflächenbereich 44 ist nicht zum Parken von Fahrzeugen geeignet oder vorgesehen und befindet sich auf der Seite der Straße 46, die der Parkplatzfläche 20 gegenüberliegt. In dem Ausschlussflächenbereich 44 können sich z.B. Wohnhäuser (nicht gezeigt) befinden, sodass im Ausschlussflächenbereich 44 keine Parkplatzbereiche 22, 24, 26 vorhanden sind.

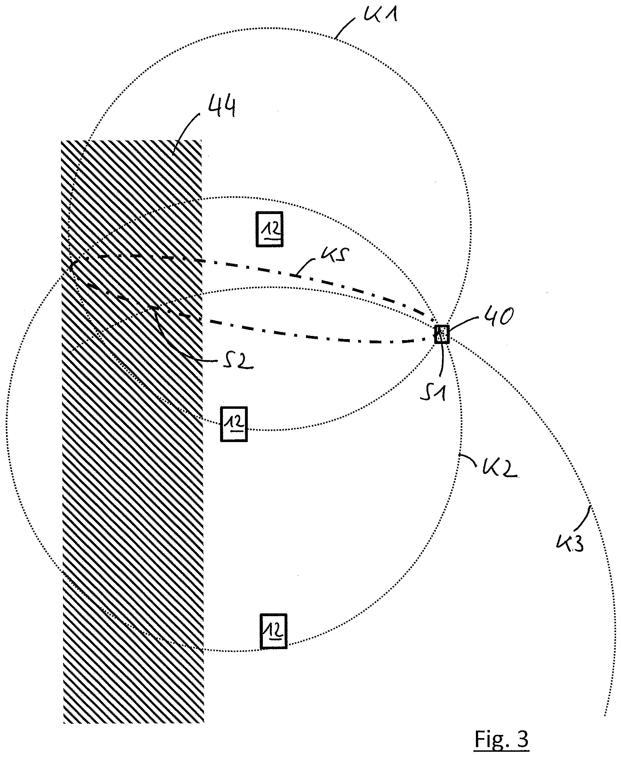

Fig. 3 zeigt schematisch die Durchführung der Positionsbestimmung des Transponders 40. Zur besseren Übersicht sind in Fig. 3 lediglich die Funkeinrichtungen 12 und der Transponder 40 gezeigt. Insbesondere die Straße 46 und die Parkplatzbereiche 22, 24, 26 sind in Fig. 3 weggelassen.

Fig. 3 zeigt die Positionsbestimmung mittels Lateration. Dabei wird von jeder Funkeinrichtung 12 ein Abstand zu dem Transponder 40 durch Laufzeitmessung des Erkennungssignals 42 und/oder durch Messung von Laufzeitunterschieden des Erkennungssignals 42 von dem Transponder 40 zu den verschiedenen Funkeinrichtungen 12 ermittelt. Der so ermittelte Abstand ergibt ein Kugelvolumen um die jeweilige Funkeinrichtung 12 herum, wobei sich der Transponder 40 auf einem Punkt der Oberfläche des Kugelvolumens befinden muss. Die so entstehenden Kugelvolumen bzw. Kugeloberflächen sind in Fig. 3 vereinfacht als Kreise K1, K2 und K3 dargestellt.

Die Schnittmenge der Kugeloberflächen, welche als Kreise K1 und K2 dargestellt sind, ist ein Schnittkreis KS, der im dreidimensionalen Raum liegt. Die Position des Transponders 40 muss auf dem Schnittkreis KS liegen. Der Schnittkreis KS schneidet sich mit dem Kugelvolumen des Kreises K3 an einem ersten Schnittpunkt S1 und einem zweiten Schnittpunkt S2. Es ist zu erkennen, dass der zweite Schnittpunkt S2 im Bereich des Ausschlussflächenbereichs 44 liegt, weshalb der zweite Schnittpunkt S2 als möglicher Standort des Transponders 40 verworfen wird. Die Position des Transponders 40 muss folglich der Position des ersten Schnittpunkts S1 entsprechen.

Wie in Fig. 1 ersichtlich ist, steht das Fahrzeug 36 auf dem ersten Parkplatzbereich 22, was durch die Ermittlung der Position des Transponders 40 erkannt wurde. Die Position des Fahrzeugs 36 wird wiederholt, beispielsweise jede Sekunde, durch erneutes Aussenden der Anfragesignale 38 und den erneuten Empfang des Erkennungssignals 42 bestimmt, so dass festgestellt werden kann, dass das Fahrzeug 36 dauerhaft auf dem ersten Parkplatzbereich 22 steht.

Zugleich wird mittels der Kameraeinheit 14 festgestellt, dass sich das Fahrzeug 36 (bzw. zumindest irgendein Fahrzeug) auf dem ersten Parkplatzbereich 22 befindet, wodurch die Ortung des Fahrzeugs 36 mittels der Funkeinrichtungen 12 bestätigt wird.

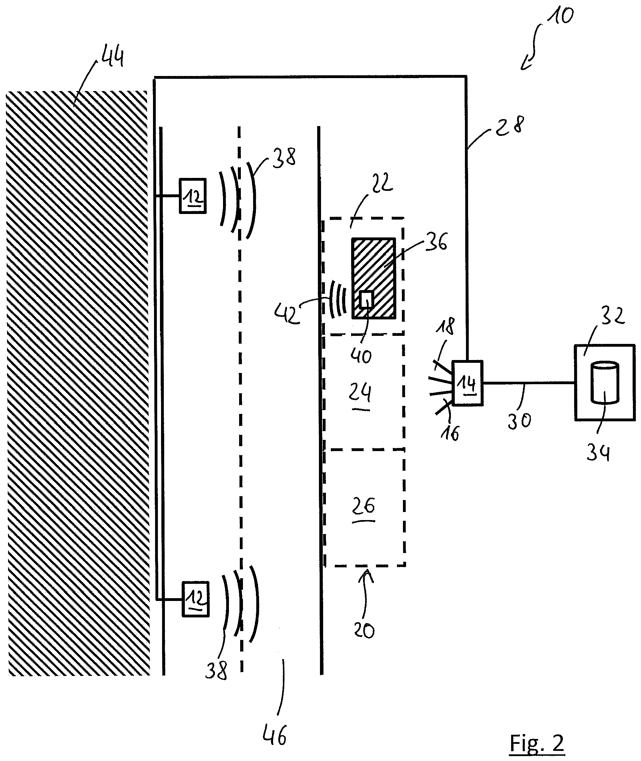

Fig. 2 zeigt eine zweite Ausführungsform des Systems 10. Die zweite Ausführungsform unterscheidet sich von der ersten Ausführungsform gemäß Fig. 1 lediglich darin, dass nur genau zwei Funkeinrichtungen 12 verwendet werden, um die Position des Transponders 40 zu ermitteln. Der Transponder 40 sendet in seinem Erkennungssignal 42 jeweils seine Einbauhöhe in dem Fahrzeug 36 mit.

Zur Positionsbestimmung wird dann zunächst wie mit Bezug auf Fig. 3 beschrieben vorgegangen. Nach der Ermittlung des Schnittkreises KS werden aber keine Schnittpunkte des Schnittkreises KS mit einem weiteren Kugelvolumen ermittelt. Stattdessen werden Schnittpunkte mit einer parallel zum Boden liegenden Ebene bestimmt, wobei die Lage der Ebene die Einbauhöhe des Transponders 40 widerspiegelt. Hierdurch können wieder zwei Schnittpunkte mit dem Schnittkreis KS ermittelt werden, wobei einer der Schnittpunkte bei Lage in dem Ausschlussflächenbereich 44 verworfen werden kann. Der verbleibende Schnittpunkt gibt dann die tatsächliche Position des Transponders 40 an.

Auf die oben erläuterte Weise kann mit zwei oder drei Funkeinrichtungen 12 die Position des Transponders 40 im dreidimensionalen Raum ermittelt werden.

### Bezugszeichenliste

- 10: System
- 12: Funkeinrichtung
- 14: Kameraeinheit
- 16: erste Kamera
- 18: zweite Kamera
- 20: Parkplatzfläche
- 22: erster Parkplatzbereich
- 24: zweiter Parkplatzbereich
- 26: dritter Parkplatzbereich
- 28: erste Datenverbindung
- 30: zweite Datenverbindung
- 32: Registrierungsserver
- 34: Datenbank
- 36: Fahrzeug
- 38: Anfragesignal
- 40: Transponder
- 42: Erkennungssignal
- 44: Ausschlussflächenbereich
- 46: Straße

- K1, K2, K3: Kreise
- KS: Schnittkreis
- S1: erster Schnittpunkt
- S2: zweiter Schnittpunkt

## Patentansprüche

1. Verfahren zur Erfassung von Fahrzeugen (36), welche in einer Parkplatzfläche (20) parken, wobei
- Ausschlussflächenbereiche (44) erkannt und/oder festgelegt werden, die nicht zum Parken von Fahrzeugen (36) geeignet und/oder vorgesehen sind,
- in oder an einem Fahrzeug (36) ein Transponder (40) angeordnet wird,
- der Transponder (40) automatisch wiederholt ein Erkennungssignal (42) aussendet,
- das Erkennungssignal (42) von mindestens zwei und höchstens drei Funkeinrichtungen (12) empfangen wird,
- mittels einer Steuereinrichtung anhand der Laufzeit und/oder anhand von Laufzeitunterschieden des Erkennungssignals (42) von dem Transponder (40) zu den Funkeinrichtungen (12) und anhand der Positionen der Ausschlussflächenbereiche (44) die Position des Transponders (40) ermittelt wird.

2. Verfahren nach Anspruch 1,
**dadurch gekennzeichnet, dass**
genau drei Funkeinrichtungen (12) zum Empfang des Erkennungssignals (42) verwendet werden, wobei die drei Funkeinrichtungen (12) entlang einer von einer Geraden abweichenden Linie angeordnet sind.

3. Verfahren nach Anspruch 1 oder 2,
**dadurch gekennzeichnet, dass**
die Funkeinrichtungen (12) in zumindest zwei unterschiedlichen Höhen über dem Boden der Parkplatzfläche (20) angeordnet sind.

4. Verfahren nach Anspruch 1,
**dadurch gekennzeichnet, dass**
genau zwei Funkeinrichtungen (12) zum Empfang des Erkennungssignals (42) verwendet werden.

5. Verfahren nach Anspruch 4,
**dadurch gekennzeichnet, dass**
der Steuereinrichtung die Höhe des Transponders (40) in oder an dem Fahrzeug bekannt ist und/oder mitgeteilt wird, wobei die Steuereinrichtung auch anhand der Höhe des Transponders (40) die Position des Transponders (40) ermittelt.

6. Verfahren nach zumindest einem der vorstehenden Ansprüche,
**dadurch gekennzeichnet, dass**
bei Messungenauigkeiten zumindest drei, bevorzugt zumindest sechs, Schnittpunkte von die Funkeinrichtungen (12) umgebenden Oberflächen von Kugelvolumen ermittelt werden,
wobei ein konvexer Polyeder oder ein konvexes Polygon ermittelt wird, auf dessen Oberflächen oder Kanten die Schnittpunkte liegen,
wobei der Schwerpunkt des Polyeders oder des Polygons bestimmt wird und der Schwerpunkt als Position des Transponders (40) verwendet wird.

7. Verfahren nach zumindest einem der vorstehenden Ansprüche,
**dadurch gekennzeichnet, dass**
eine gerade Verbindungslinie zwischen zwei Funkeinrichtungen (12) in der Draufsicht außerhalb der Parkplatzfläche (20) verläuft.

8. Verfahren nach zumindest einem der vorstehenden Ansprüche,
**dadurch gekennzeichnet, dass**
vor der Ermittlung der Position des Transponders (40) Parkplatzbereiche (22, 24, 26) in der Parkplatzfläche (20) erkannt und/oder festgelegt werden.

9. Verfahren nach Anspruch 8,
**dadurch gekennzeichnet, dass**
die Steuereinrichtung anhand des Erkennungssignals (42) eine Identifikation des Transponders (40) ermittelt, wobei anhand des Erkennungssignals (42) auch ermittelt wird, ob das Fahrzeug (36) parkt und sofern das Fahrzeug (36) auf einem der Parkplatzbereiche (22, 24, 26) parkt,
- die Identifikation des Transponders (40) und der von dem Fahrzeug (36) verwendete Parkplatzbereich (22, 24, 26) an einen Registrierungsserver (32) übermittelt wird,
- der Registrierungsserver (32) anhand der Identifikation des Transponders (40) ein Statussignal für den verwendeten Parkplatzbereich (22, 24, 26) ausgibt.

10. Verfahren nach Anspruch 9,
**dadurch gekennzeichnet, dass**
der Registrierungsserver (32) anhand der Identifikation des Transponders (40) einen Berechtigungsstatus für den verwendeten Parkplatzbereich (22, 24, 26) ermittelt, wobei der Berechtigungsstatus in dem Statussignal enthalten ist.

11. Verfahren nach Anspruch 9 oder 10,
**dadurch gekennzeichnet, dass**
Statussignale betreffend mehrere Parkplatzbereiche (22, 24, 26) an einen Parkplatzserver und/oder ein mobiles Anzeigegerät übermittelt werden, wobei der Parkplatzserver und/oder das mobile Anzeigegerät eine Übersicht über freie und belegte Parkplatzbereiche (22, 24, 26) anhand der Statussignale anzeigen.

12. Verfahren nach zumindest einem der vorstehenden Ansprüche,
**dadurch gekennzeichnet, dass**
der Transponder (40) das Erkennungssignal (42) verschlüsselt aussendet, wobei das Erkennungssignal (42) insbesondere mittels eines asymmetrischen Verschlüsselungsverfahrens erzeugt wird.

13. System (10) umfassend
zumindest einen Transponder (40),
zwei oder drei Funkeinrichtungen (12) und
eine Steuereinrichtung,
**dadurch gekennzeichnet, dass**
das System (10) zur Durchführung des Verfahrens nach einem der vorstehenden Ansprüche ausgebildet ist.

14. System (10) nach Anspruch 13,
**dadurch gekennzeichnet, dass**
die Funkeinrichtungen (12) in oder an Straßenleuchten, Fassaden, Straßenschildern und/oder Ampeln angebracht sind.

15. System (10) nach einem der Ansprüche 13 oder 14,
**gekennzeichnet durch**
ein Überwachungssystem zur optischen, zumindest bereichsweisen Erfassung der Parkplatzfläche (20), wobei das Überwachungssystem ein Kamerasystem (14) und eine Erkennungseinheit umfasst, die ausgebildet ist, freie und besetzte Parkplatzbereiche (22, 24, 26), insbesondere mittels Bildverarbeitung, bevorzugt anhand von Einzelbildern, zu erkennen.

## Claims

1. A method of detecting vehicles (36) which park in a parking space zone (20), wherein
- excluded zones (44) are recognized and/or determined which are not suitable and/or provided for parking vehicles (36);
- a transponder (40) is arranged in or at a vehicle (36);
- the transponder (40) automatically repeatedly transmits a recognition signal (42);
- the recognition signal (42) is received by at least two and at most three radio devices (12); and
- the position of the transponder (40) is determined by means of a control device with reference to the time of flight and/or with reference to time of flight differences of the recognition signal (42) from the transponder (40) to the radio devices (12) and with reference to the positions of the excluded zones (44).

2. A method in accordance with claim 1,
**characterized in that**
exactly three radio devices (12) are used for the reception of the recognition signal (42), with the three radio devices (12) being arranged along a line deviating from a straight line.

3. A method in accordance with claim 1 or claim 2,
**characterized in that**
the radio devices (12) are arranged at at least two different heights above the ground of the parking space zone (20).

4. A method in accordance with claim 1,
**characterized in that**
exactly two radio devices (12) are used for the reception of the recognition signal (42).

5. A method in accordance with claim 4,
**characterized in that**
the height of the transponder (40) in or at the vehicle is known and/or communicated to the control device, with the control device also determining the position of the transponder (40) with reference to the height of the transponder (40).

6. A method in accordance with at least one of the preceding claims,
**characterized in that**
at least three points of intersection, preferably at least six points of intersection, of surfaces of spherical volumes surrounding the radio devices (12) are determined in the event of measurement inaccuracies,
with a convex polyhedron or a convex polygon being determined on whose surfaces or edges the points of intersection lie, and
with the balance point of the polyhedron or of the polygon being determined and the balance point being used as the position of the transponder (40).

7. A method in accordance with at least one of the preceding claims,
**characterized in that**
a straight connection line runs between two radio devices (12) in the plan view outside the parking space zone (20).

8. A method in accordance with at least one of the preceding claims,
**characterized in that**
parking bays (22, 24, 26) are recognized and/or determined in the parking space zone (20) before the determination of the position of the transponder (40).

9. A method in accordance with claim 8,
**characterized in that**
the control device determines an identification of the transponder (40) with reference to the recognition signal (42), with it also being determined with reference to the recognition signal (42) whether the vehicle (36) has parked and, if the vehicle (36) has parked on one of the parking bays (22, 24, 26),
- the identification of the transponder (40) and the parking bay (22, 24, 26) used by the vehicle (36) are transmitted to a registration server (32) and
- the registration server (32) outputs a status signal for the parking bay (22, 24, 26) used with reference to the identification of the transponder (40).

10. A method in accordance with claim 9,
**characterized in that**
the registration server (32) determines an authorization status for the parking bay (22, 24, 26) used with reference to the identification of the transponder (40), with the authorization status being included in the status signal.

11. A method in accordance with claim 9 or claim 10,
**characterized in that**
status signals relating to a plurality of parking bays (22, 24, 26) are transmitted to a car park server and/or to a mobile display device, with the car park server and/or the mobile display device indicating an overview of free and occupied parking bays (22, 24, 26) with reference to the status signals.

12. A method in accordance with at least one of the preceding claims,
**characterized in that**
the transponder (40) transmits the recognition signal (42) in encrypted form, with the recognition signal (42) in particular being generated by means of an asymmetrical encryption method.

13. A system (10) comprising
at least one transponder (40);
two or three radio devices (12); and
a control device,
**characterized in that**
the system (10) is configured to carry out the method in accordance with any one of the preceding claims.

14. A system (10) in accordance with claim 13,
**characterized in that**
the radio devices (12) are attached in or to street lamps, building fronts, street signs and/or traffic lights.

15. A system (10) in accordance with one of the claims 13 or 14,
**characterized by**
a monitoring system for the optical, at least regional detection of the parking space zone (20), with the monitoring system comprising a camera system (14) and a recognition unit which is configured to recognize free and occupied parking bays (22, 24, 26), in particular by means of image processing, preferably with reference to individual frames.

## Revendications

1. Procédé de détection de véhicules (36) garés dans une aire de stationnement (20), dans lequel
- des zones d'exclusion (44) sont reconnues et/ou définies, qui ne sont pas adaptées et/ou destinées au stationnement de véhicules (36),
- un transpondeur (40) est placé dans ou sur un véhicule (36),
- le transpondeur (40) émet automatiquement et à répétition un signal de reconnaissance (42),
- le signal de reconnaissance (42) est reçu par au moins deux et au plus trois dispositifs radio (12),
- la position du transpondeur (40) est déterminée au moyen d'un dispositif de commande sur la base du temps de propagation et/ou sur la base des différences de temps de propagation du signal de reconnaissance (42) du transpondeur (40) vers les dispositifs radio (12) et sur la base des positions des zones d'exclusion (44).

2. Procédé selon la revendication 1,
**caractérisé en ce que**
précisément trois dispositifs radio (12) sont utilisés pour recevoir le signal de reconnaissance (42), les trois dispositifs radio (12) étant disposés le long d'une ligne s'écartant d'une ligne droite.

3. Procédé selon la revendication 1 ou 2,
**caractérisé en ce que**
les dispositifs radio (12) sont disposés à au moins deux hauteurs différentes au-dessus du sol de l'aire de stationnement (20).

4. Procédé selon la revendication 1,
**caractérisé en ce que**
précisément deux dispositifs radio (12) sont utilisés pour recevoir le signal de reconnaissance (42).

5. Procédé selon la revendication 4,
**caractérisé en ce que**
la hauteur du transpondeur (40) dans ou sur le véhicule est connue et/ou communiquée au dispositif de commande, le dispositif de commande déterminant également la position du transpondeur (40) à partir de la hauteur du transpondeur (40).

6. Procédé selon l'une au moins des revendications précédentes,
**caractérisé en ce que**
en cas d'imprécisions de mesure, au moins trois, de préférence au moins six, points d'intersection des surfaces de volumes sphériques entourant les dispositifs radio (12) sont déterminées,
un polyèdre convexe ou un polygone convexe est déterminé, sur les surfaces ou les arêtes duquel se trouvent les points d'intersection,
le centre de masse du polyèdre ou du polygone est déterminé, et le centre de masse est utilisé comme position du transpondeur (40).

7. Procédé selon l'une au moins des revendications précédentes,
**caractérisé en ce que**
une ligne droite de connexion entre deux dispositifs radio (12) s'étend à l'extérieur de l'aire de stationnement (20), en vue de dessus.

8. Procédé selon l'une au moins des revendications précédentes,
**caractérisé en ce que**
avant de déterminer la position du transpondeur (40), des zones de parking (22, 24, 26) sont reconnues et/ou définies dans l'aire de stationnement (20).

9. Procédé selon la revendication 8,
**caractérisé en ce que**
le dispositif de commande détermine une identification du transpondeur (40) en se basant sur le signal de reconnaissance (42), et sur la base du signal de reconnaissance (42) on détermine également si le véhicule (36) est garé, et
au cas où le véhicule (36) est garé dans l'une des zones de parking (22, 24, 26),
- l'identification du transpondeur (40) et la zone de parking (22, 24, 26) utilisée par le véhicule (36) sont transmises à un serveur d'enregistrement (32),
- le serveur d'enregistrement (32) émet un signal d'état pour la zone de parking utilisée (22, 24, 26) en se basant sur l'identification du transpondeur (40).

10. Procédé selon la revendication 9,
**caractérisé en ce que**
le serveur d'enregistrement (32) détermine un statut d'autorisation pour la zone de parking utilisée (22, 24, 26) en se basant sur l'identification du transpondeur (40), le statut d'autorisation étant contenu dans le signal d'état.

11. Procédé selon la revendication 9 ou 10,
**caractérisé en ce que**
des signaux d'état relatifs à plusieurs zones de parking (22, 24, 26) sont transmis à un serveur de stationnement et/ou à un dispositif d'affichage mobile, le serveur de stationnement et/ou le dispositif d'affichage mobile affichant une vue d'ensemble des zones de stationnement libres et occupées (22, 24, 26) en se basant sur les signaux d'état.

12. Procédé selon l'une au moins des revendications précédentes,
**caractérisé en ce que**
le transpondeur (40) émet de façon chiffrée le signal de reconnaissance (42), le signal de reconnaissance (42) étant généré en particulier par une méthode de chiffrage asymétrique.

13. Système (10), comportant
au moins un transpondeur (40),
deux ou trois dispositifs radio (12), et
un dispositif de commande,
**caractérisé en ce que**
le système (10) est réalisé pour mettre en œuvre le procédé selon l'une des revendications précédentes.

14. Système (10) selon la revendication 13,
**caractérisé en ce que**
les dispositifs radio (12) sont montés dans ou sur des réverbères, des façades, des panneaux de signalisation et/ou des feux de circulation.

15. Système (10) selon l'une des revendications 13 ou 14,
**caractérisé en ce que**
un système de surveillance est conçu pour la détection optique, au moins locale, de l'aire de stationnement (20), le système de surveillance comprenant un système de caméra (14) et une unité de reconnaissance qui est conçue pour reconnaître des zones de parking (22, 24, 26) libres et occupées en particulier au moyen d'un traitement d'images, de préférence sur la base d'images individuelles.
